# EUROPÄISCHE PATENTSCHRIFT

(11) **EP 4 522 464 B1**
(45) Veröffentlichungstag und Bekanntmachung des Hinweises auf die Patenterteilung: **11.03.2026**
(21) Anmeldenummer: 23727793.4
(22) Anmeldetag: 10.05.2023
(51) Int. Cl.: B60R 22/343, B60R 22/34

(54) **GURTAUFROLLER MIT EINER ELEKTRISCH BETÄTIGBAREN BLOCKIEREINRICHTUNG**
SEATBELT RETRACTOR HAVING AN ELECTRICALLY ACTUATABLE BLOCKING DEVICE
ENROULEUR DE CEINTURE DE SÉCURITÉ AYANT UN DISPOSITIF DE BLOCAGE POUVANT ÊTRE ACTIONNÉ ÉLECTRIQUEMENT

(30) Priorität: 03.06.2022 DE 102022114164
(43) Veröffentlichungstag der Anmeldung: 19.03.2025
(73) Patentinhaber: Autoliv Development AB, 447 83 Vårgårda (SE)
(72) Erfinder: MALEKI, Anja, 21509 Glinde (DE); KUENZLER, Florian, 22880 Wedel (DE); RINGS, Philip, 22846 Norderstedt (DE); KUTSCHER, Fooke, 25337 Elmshorn (DE); KAPSALIS, Christian, 22299 Hamburg (DE); BARGMANN, Arne, 22083 Hamburg (DE)
(74) Vertreter: Müller Verweyen
(86) Internationale Anmeldenummer: PCT/EP2023/062368
(87) Internationale Veröffentlichungsnummer: WO 2023/232411

(56) Entgegenhaltungen:
- DE-A1- 102019 213 915
- GB-A- 2 398 824

## Beschreibung

Die vorliegende Erfindung betrifft einen Gurtaufroller mit einer elektrisch betätigbaren Blockiereinrichtung mit den Merkmalen des Oberbegriffs von Anspruch 1.

Eine gattungsgemäße elektrisch betätigbare Blockiereinrichtung ist z.B. aus der GB 2 398 824 A bekannt.

Derartige Blockiereinrichtungen dienen dazu, eine außenverzahnte Steuerscheibe, welche drehbar an einer Gurtwelle des Gurtaufrollers gelagert ist, durch Eingriff eines Blockierhebels gegenüber der Gurtwelle anzuhalten und dadurch eine Blockierklinke zu einer Einsteuerbewegung in eine fahrzeugfeste Verzahnung zu zwingen, wodurch wiederum die Gurtwelle in Auszugsrichtung blockiert wird.

Bei herkömmlichen mechanischen Blockiereinrichtungen ist eine träge Masse auf einer Aufstandsfläche gelagert, welche bei einem Überschreiten einer vorbestimmten Fahrzeugverzögerung ausgelenkt wird, dadurch den Blockierhebel auslenkt und zu einem Eingriff in die Verzahnung der Steuerscheibe zwingt. Derartige mechanische Blockiereinrichtungen werden auch als fahrzeugsensitive Sensoreinrichtungen bezeichnet. Ein Problem dieser mechanischen Blockiereinrichtungen ist, dass die träge Masse immer in einer definierten Ausrichtung auf der Aufstandsfläche zu der Fahrzeuglängsachse und der Fahrzeugquerachse unabhängig von der Einbaugeometrie des Gurtaufrollers ausgerichtet sein muss, damit die Gurtwelle nicht unbeabsichtigt blockiert wird. Damit muss der Gurtaufroller fahrzeugindividuell ausgelegt werden, indem die Ausrichtung der Aufstandsfläche und der darauf anliegenden Masse zu dem Gurtaufroller individuell so ausgelegt wird, dass sie unter Berücksichtigung der Einbaugeometrie des Gurtaufrollers im Fahrzeug der vorgegebenen Ausrichtung entspricht. Ferner besteht bei in den Vordersitzen integrierten Gurtaufrollern wie z.B. bei Cabriolets das Problem, dass die träge Masse bei einer Verstellung des Neigungswinkels der Rückenlehne bzw. beim Vorwärtsklappen der Rückenlehnen zu einem Einstieg auf die hinteren Sitze unbeabsichtigt auf der Aufstandsfläche ausgelenkt und dadurch der Blockierhebel unbeabsichtigt zu einer Einsteuerbewegung in die Außenverzahnung der Steuerscheibe gezwungen wird. Damit ist der Gurtaufroller in Auszugsrichtung blockiert und die Rückenlehne kann nicht weiter verschwenkt werden bzw. der Insasse kann sich nicht anschnallen. Um das zu vermeiden, müssen zusätzliche Abschaltmechaniken bzw. Ausgleichsmechaniken vorgesehen werden, die ihrerseits aber nur in diesen Fällen wirken dürfen, damit die Rückhaltung des Insassen im Unfall in jedem Fall gegeben ist. Durch diese zu lösenden Aufgaben wird eine solche mechanische Blockiereinrichtung mechanisch sehr komplex.

Bei einer elektrisch betätigbaren Blockiereinrichtung, wie sie z.B. aus der GB 2 398 824 A bekannt ist, wird die Bewegung des Blockierhebels hingegen elektrisch gesteuert, wodurch die bisher erforderliche träge Masse entfällt. Der Gurtaufroller kann dadurch unverändert in verschiedenen Einbaulagen im Fahrzeug und auch in Rückenlehnen montiert werden. Ferner kann die Blockierung der Gurtwelle durch ein elektrisches Signal ausgehend von einer Steuereinrichtung gesteuert werden. Das Signal kann dabei von einer Steuereinrichtung erzeugt werden, welche das Signal auch in Abhängigkeit von anderen Sensoreinrichtungen oder Steuerungssystemen erzeugen kann. So ist es z.B. denkbar, die Gurtwelle automatisch bei einer Aktivierung eines fahrdynamischen Assistenzsystems zu blockieren, welches z.B. in Abhängigkeit eines Signals einer optischen Sensoreinrichtung angesteuert wird. Damit wird auch die elektrische Blockiereinrichtung direkt oder indirekt in Abhängigkeit von dem Signal der optischen Sensoreinrichtung angesteuert. Ferner ist die elektrisch betätigbare Blockiereinrichtung in beliebigen Ausrichtungen und Anordnungen funktionsfähig, da sie nicht durch Trägheitskräfte betätigt wird und damit nicht in einer speziellen Ausrichtung zu der Fahrzeugfahrtrichtung ausgerichtet sein muss. Damit kann sie bevorzugt auch in Sitzen von wenigstens teilweise autonom fahrenden Fahrzeugen angeordnet werden, welche der Insasse zu einer verbesserten Kommunikation mit den anderen Insassen, zur Ausrichtung in einer Ruhestellung oder auch allgemein zur Nutzung der durch das autonome Fahren gewonnenen Freiheiten in erheblich größeren Verstellbereichen verstellen kann, als er dies bei Sitzen von konventionellen nicht autonom fahrenden Fahrzeugen konnte.

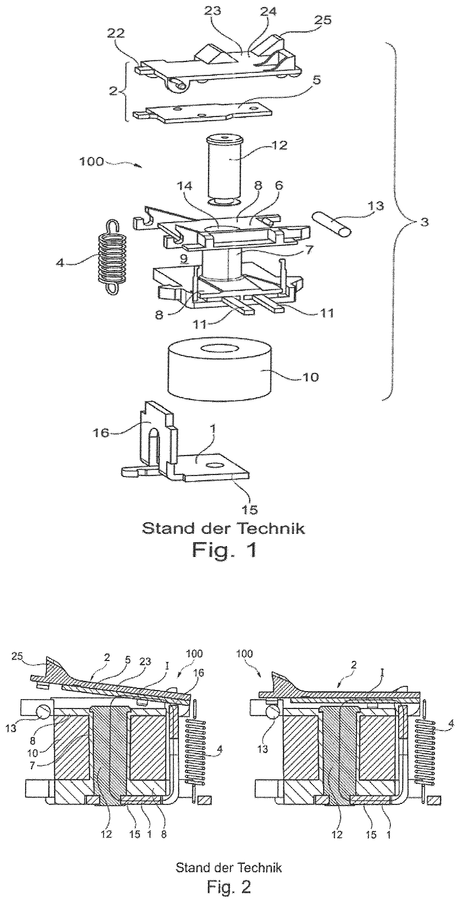

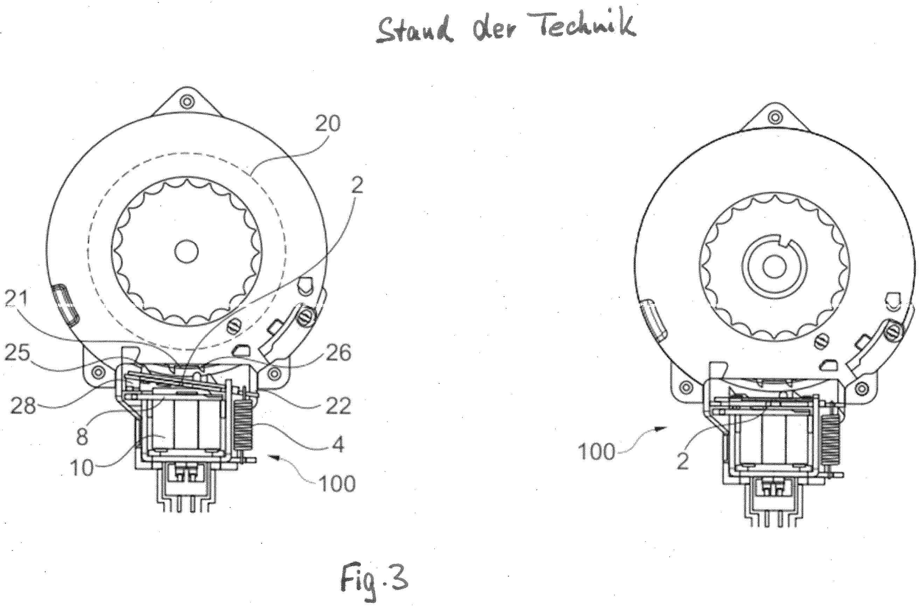

Eine von der Anmelderin in ihren Produkten verwendete elektrisch betätigbare Blockiereinrichtung 100, welche der Ausführungsform der GB 2 398 824 A entspricht, ist in den Figuren 1 und 2 als Einzelteil und in der Figur 3 an einem Gurtaufroller gezeigt. Die elektrisch betätigbare Blockiereinrichtung 100 umfasst als Grundelemente ein Gehäuse 1 mit einem L-förmigen Grundaufbau mit einer Grundplatte 15 und einem ersten hochstehenden Schenkel 16, einen an dem ersten hochstehenden Schenkel 16 des Gehäuses 1 schwenkbar gelagerten Blockierhebel 2, einen Elektromagneten 3 und eine erste Feder 4, welche mit einem Ende an dem Gehäuse 1 gehalten ist und mit dem anderen Ende mit einem von dem ersten hochstehenden Schenkel 16 nach außen vorstehenden Hebelarm 22 des Blockierhebels 2 verbunden ist. Die erste Feder 4 ist als Zugfeder so ausgelegt, so dass sie den Blockierhebel 2 in eine Stellung vorspannt, in welcher dieser mit einer Blockierspitze 25 in eine Verzahnung 26 einer Steuerscheibe 21 eingreift und dadurch die Steuerscheibe 21 gegenüber der Gurtwelle 20 zurückhält. Die Steuerscheibe 21 mit der Verzahnung 26 ist nur in der Figur 3 in einem Gurtaufroller zu erkennen. Damit wird die Blockierklinke bei einer Drehung der Gurtwelle 20 in Auszugsrichtung automatisch zu einer Einsteuerbewegung in eine fahrzeugfeste Verzahnung gezwungen, und die Gurtwelle 20 ist nachfolgend gegen einen weiteren Gurtbandauszug blockiert. Der Blockierhebel 2 umfasst ein Konturteil 24 und eine Stahlplatte 5, wobei die Stahlplatte 5 dem Elektromagneten 3 zugewandt ist, so dass der Blockierhebel 2 bei einer Bestromung des Elektromagneten 3 von diesem angezogen und damit aus der Verzahnung 26 der Steuerscheibe 21 herausgezogen wird. Damit ist die Gurtwelle 20 nachfolgend in Aus-und Einzugsrichtung frei drehbar. Der Vorteil dieser Lösung ist darin zu sehen, dass die Gurtwelle 20 auch bei einem Stromausfall oder einem Defekt des Elektromagneten 3 in Auszugsrichtung blockiert ist, und der Insasse wird auch in diesem Fall sicher zurückgehalten.

Der Elektromagnet 3 umfasst ein Grundbauteil 6 mit einem säulenförmigen Mittenabschnitt 7 und zwei Radialflansche 8, von denen jeweils einer an einem der Enden des Mittenabschnittes 7 radial nach außen vorsteht. Der Elektromagnet 3 ist mit dem Grundbauteil 6 auf der Grundplatte 15 des Gehäuses 1 gehalten. Das Grundbauteil 6 weist einen rohrförmigen Durchgangsabschnitt 14 in dem Mittenabschnitt 7 und einen ringförmigen Zwischenraum 9 radial außen an dem Mittenabschnitt 7 auf, wobei der ringförmige Zwischenraum 9 zu den Enden das Mittenabschnittes 7 hin durch die Radialflansche 8 begrenzt ist. Ferner umfasst der Elektromagnet 3 eine Spule 10 mit einer Vielzahl von Windungen, welche in dem ringförmigen Zwischenraum 9 angeordnet ist und über in dem Grundbauteil 6 vorgesehene Leitungen 11 mit einer externen Steuereinrichtung elektrisch kontaktiert ist. Außerdem umfasst der Elektromagnet 3 einen ersten Eisenkern 12, der in dem rohrförmigen Durchgangsabschnitt 14 des Grundbauteils 6 angeordnet und mit einem freien Ende der Stahlplatte 5 des Blockierhebels 2 zugewandt ist.

Bei einer Bestromung der Spule 10 wird der Blockierhebel 2 angezogen, indem er einen ersten magnetischen Kreis I, definiert durch den ersten hochstehenden Schenkel 16 des Gehäuses 1, den ersten Eisenkern 12 und die Abschnitte des Blockierhebels 2 und der Grundplatte 15 zwischen dem ersten Eisenkern 12 und dem ersten hochstehenden Schenkel 16 schließt, wie in der rechten Darstellung der Figur 2 zu erkennen ist. Ferner ist ein Dämpfungselement 13 in Form eines in sich weichen Rohres z.B. in Form eines kurzen Schlauchstückes vorgesehen, welches an seinen Enden zwischen zwei Fortsätzen des dem Blockierhebels 2 zugewandten Radialflansches 8 eingespannt ist. Das Dämpfungselement 13 ist so positioniert, dass der Blockierhebel 2 mit seinem freien Ende in der ausgelenkten Stellung nicht an dem Dämpfungselement 13 anliegt (linke Darstellung der Figur 2) und erst in der angezogenen Stellung an dem mittigen weichen Abschnitt des Dämpfungselementes 13 zwischen den Einspannstellen zur Anlage gelangt (rechte Darstellung der Figur 2). Dadurch wird die Anzugsbewegung des Blockierhebels 2 in der Endphase der Bewegung abgedämpft. Durch diese Dämpfung wird ein weicher Anschlag realisiert, und es werden störende "Klappergeräusche" bei der Anzugsbewegung und möglichen nachfolgenden geringfügigen Bewegungen des Blockierhebels 2 vermieden.

Aufgabe der Erfindung ist es, einen Gurtaufroller der gattungsgemäßen Art mit einer reduzierten Geräuschentwicklung und einem vereinfachten Grundaufbau bereitzustellen.

Zur Lösung der Aufgabe wird ein Gurtaufroller mit den Merkmalen von Anspruch 1 vorgeschlagen. Weitere bevorzugte Ausführungsformen der Erfindung sind den Unteransprüchen, den Figuren und der zugehörigen Beschreibung zu entnehmen.

Gemäß dem Grundgedanken der Erfindung wird vorgeschlagen, dass an dem Gehäuse ein Vorsprung vorgesehen ist, welcher derart geformt ist, dass die erste Feder unabhängig von der Stellung des Blockierhebels daran anliegt und quer zu der auf den Hebelarm ausgeübten Federkraft vorgespannt ist.

Durch die vorgeschlagene Lösung wird die erste Feder zusätzlich vorgespannt und damit gegenüber unkontrollierten Bewegungen fixiert, wodurch die Geräuschentwicklung durch den dadurch verhinderten Körperkontakt der ersten Feder mit den angrenzenden Teilen der Blockiereinrichtung reduziert wird. Dabei wird die Feder unabhängig von der Stellung des Blockierhebels vorgespannt, so dass die erste Feder sowohl in der ausgelenkten Stellung des Blockierhebels also bei einer blockierten Gurtwelle als auch bei einem angezogenen Blockierhebels also bei einer freigegebenen Gurtwelle durch den Vorsprung gespannt ist. Dabei liegt die erste Feder so an dem Vorsprung an, dass sie quer zu der von ihr auf den Hebelarm ausgeübten Federkraft vorgespannt ist, so dass die Bewegung des Hebelarmes keinen oder nur einen möglichst geringen Einfluss auf die von dem Vorsprung auf die erste Feder ausgeübte Vorspannung hat.

Der entscheidende Vorteil der vorgeschlagenen Lösung ist darin zu sehen, dass die erste Feder, welche die Bewegung des Blockierhebels auslöst in ihrem Bewegungsverhalten unmittelbar eingeschränkt wird. Damit wird die Geräuschentwicklung möglichst nahe ihres Entstehungsortes in der Einspannung der ersten Feder an dem Blockierhebel und zu dem Gehäuse reduziert. Dabei bewirkt die Vorspannung der ersten Feder nicht nur eine verstärkte Einspannung der ersten Feder in der Verbindung mit dem Blockierhebel und dem Gehäuse, sondern es werden zusätzlich mögliche Querbewegungen der ersten Feder und damit die Wahrscheinlichkeit eines Anschlagens der ersten Feder an den angrenzenden Bauteilen der Blockiereinrichtung und die damit verbundene mögliche Geräuschentwicklung reduziert.

Weiter wird vorgeschlagen, dass die erste Feder mit einem zweiten Ende im Bereich der Grundplatte gehalten ist, und der Vorsprung an dem von der Grundplatte hochstehenden ersten Schenkel des Gehäuses angeordnet ist. Die erste Feder erstreckt sich damit seitlich an der Blockiereinrichtung von der Grundplatte zu dem Hebelarm des Blockierhebels, so dass der erste Schenkel seitlich der ersten Feder eine konstruktiv einfach zu nutzende Fläche bietet, an der der Vorsprung angeordnet werden kann. Ferner bietet die erste Feder im Bereich zwischen der Halterung an dem Hebelarm und im Bereich der Grundplatte einen möglichst langen und frei zugänglichen Zwischenabschnitt, an dem der Vorsprung zu Anlage gelangen kann, und über den die erste Feder gespannt werden kann.

Weiter wird vorgeschlagen, dass der Vorsprung an ein an dem Gehäuse gehaltenen Ansatzteil angeformt ist. Damit muss das Gehäuse selbst nicht verändert werden, soweit es bereits eine ausreichende Ansatzfläche zur Befestigung des Ansatzteils aufweist. Ferner kann das Ansatzteil individuell zur Ausbildung des Vorsprunges geformt und in seiner Befestigung so ausgerichtet werden, dass die erste Feder durch ihre Befestigung an der Blockiereinrichtung daran automatisch zur Anlage gelangt und erfindungsgemäß vorgespannt wird.

Dabei kann das Ansatzteil bevorzugt einen im Bereich der Grundplatte angeordneten Halteansatz aufweisen, und die erste Feder kann mit ihrem zweiten Ende an dem Halteansatz gehalten sein. Das Ansatzteil dient damit zusätzlich zu der Befestigung des zweiten Endes der Feder, was den Vorteil bietet, dass der Vorsprung und der Befestigungsansatz der ersten Feder für deren zweites Ende an ein und demselben Teil verwirklicht sind, und damit in einer festen räumlichen Zuordnung zueinander angeordnet sind. Ferner muss das Gehäuse weder zur Ausbildung des Vorsprunges noch zur Befestigung des zweiten Endes der Feder ausgebildet sein, soweit es nur eine Ansatzfläche für das Ansatzteil aufweist. Das Ansatzteil ist speziell so ausgebildet, dass der Halteansatz im Bereich der Grundplatte des Gehäuses angeordnet ist. Damit kann die erste Feder in ihrer Länge möglichst lang bemessen und unter Ausnutzung des gesamten Freiraumes zwischen dem Blockierhebel und der Grundplatte angeordnet werden.

Dabei kann der Halteansatz bevorzugt so ausgebildet sein, dass er die Grundplatte zur Außenseite hin erweitert. Der Halteansatz bildet damit einen verlängerten Ansatz der Grundplatte aus, so dass die Befestigungsstellen der ersten Feder an dem Hebelarm des Blockierhebels und an dem Halteansatz gegenüberliegend unter Bildung eines dazwischenliegenden Freiraumes ausgebildet werden können.

Weiter wird vorgeschlagen, dass die erste Feder durch eine zylindrische Schraubenfeder gebildet ist, und der Vorsprung die erste Feder quer zu ihrer Längserstreckung seitlich auslenkt. Die vorgeschlagene Ausbildung der ersten Feder bietet den Vorteil einer Vorspannung der ersten Feder, indem sie seitlich ausgelenkt wird, ohne dass sie dabei ihre gewünschten Eigenschaften hinsichtlich der Vorspannung des Hebelarmes des Blockierhebels verliert. Dabei wird die erste Feder durch den Vorsprung quer zu der Ausübung ihrer Federkraft auf den Hebelarm vorgespannt, was den Vorteil aufweist, dass die Vorspannung der ersten Feder über den Vorsprung bewusst nicht oder nur zum Teil in Richtung der Ausübung der Federkraft auf den Hebelarm gerichtet ist und damit die von der ersten Feder auf den Hebelarm ausgeübte Federkraft in keinem Fall verkleinert und möglichst erhöht.

Weiter wird vorgeschlagen, dass der Vorsprung durch einen Nocken mit einer gekrümmten Anlagefläche gebildet ist. Die erste Feder wird durch den Vorsprung vorgespannt und dabei in eine gekrümmte Formgebung überführt. Dieser gekrümmten Formgebung der ersten Feder ist der Vorsprung durch seine gekrümmte Anlagefläche angepasst, so dass die erste Feder durch den Vorsprung möglichst sanft und mit möglichst lokalen Kräften in die vorgespannte Form gedrängt wird. Die Anlagefläche ist dazu gleichgerichtet zu der Krümmung der ersten Feder in der Anlage an dem Vorsprung gekrümmt.

Weiter wird vorgeschlagen, dass die erste Feder mindestens im Bereich der Anlage des Vorsprunges eine elastische Kunststoffummantelung aufweist. Durch die elastische Kunststoffummantelung können die Geräuschentwicklungen bei Bewegungen der ersten Feder zu dem Vorsprung weiter reduziert werden, indem die Geräusche bei einem Kontakt durch die elastische Kunststoffummantelung gedämpft werden. Außerdem kann die erste Feder dadurch vor äußeren mechanischen Einflüssen geschützt werden.

Die Erfindung wird im Folgenden anhand einer bevorzugten Ausführungsform unter Bezugnahme auf die beigefügten Figuren erläutert. Dabei zeigt
- Fig. 1: eine elektrisch betätigbare Blockiereinrichtung nach dem Stand der Technik in Explosionsdarstellung; und
- Fig. 2: eine elektrisch betätigbare Blockiereinrichtung nach dem Stand der Technik mit einem Blockierhebel in zwei verschiedenen Stellungen in Schnittdarstellung; und
- Fig. 3: einen Gurtaufroller nach dem Stand der Technik mit einer Blockiereinrichtung nach den Figuren 1 und 2 mit einer blockierten und einer freigegebenen Gurtwelle; und
- Fig. 4: eine erfindungsgemäß weiterentwickelte Blockiereinrichtung in perspektivischer Darstellung; und
- Fig. 5: eine erfindungsgemäß weiterentwickelte Blockiereinrichtung in Seitendarstellung; und
- Fig. 6: eine erfindungsgemäß weiterentwickelte Blockiereinrichtung in Schnittdarstellung;
- Fig. 7: eine erfindungsgemäß weiterentwickelte Blockiereinrichtung ohne Blockierhebel.

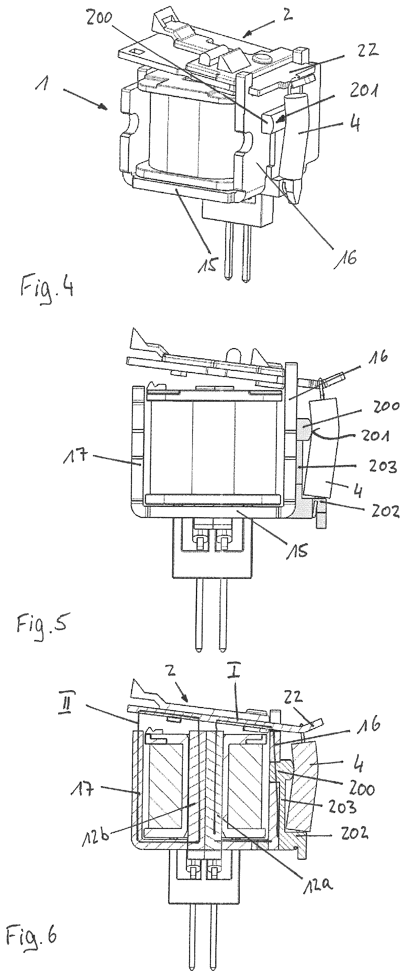

In den Figuren 4 bis 6 ist eine weiterentwickelte elektrische Blockiereinrichtung 100 zu erkennen, welche die Blockiereinrichtung 100 in den Figuren 1 bis 2 in dem Gurtaufroller der Fig. 3 zur Verwirklichung des erfindungsgemäßen Gurtaufrollers ersetzt. Die Blockiereinrichtung 100 der Figuren 4 bis 5 unterscheidet sich von der Blockiereinrichtung 100 der Figuren 1 und 2 dadurch, dass an der Grundplatte 15 des Gehäuses 1 zusätzlich ein zweiter hochstehender Schenkel 17 vorgesehen ist, welcher bei einem angezogenen Blockierhebel 2 einen zweiten magnetischen Kreis II nach demselben Prinzip wie den ersten magnetischen Kreis I über den ersten hochstehenden Schenkel 16 schließt, wodurch die Anzugskraft des Blockierhebels 2 erhöht werden kann. Hierzu sind statt des einen magnetischen Eisenkerns 12 in der Blockiereinrichtung 100 der Figuren 1 und 2 zwei voneinander getrennte Eisenkerne 12a und 12b vorgesehen. Ferner ist hier das Dämpfungselement 13 entfallen, welches aber auch zusätzlich vorgesehen werden kann, wenn die Geräuschentwicklung und das Bewegungsverhalten des Blockierhebels 2 weiter gedämpft werden soll. Ferner kann zusätzlich eine zweite nicht dargestellte Feder vorgesehen sein, welche unmittelbar auf den Blockierarm 23 wirkt und so positioniert ist, dass sie beim Heranziehen des Blockierhebels 2 an das Gehäuse 1 gespannt wird und die Ausschwenkbewegung des Blockierhebels 2 unterstützt und dadurch die Verriegelungszeit der Gurtwelle 20 verkürzt. Ferner kann der Blockierhebel 2 dadurch weiter verspannt werden, so dass dessen unkontrollierte Bewegungen weiter reduziert werden können.

Die weiterentwickelte Blockiereinrichtung 100 nach den Figuren 4 bis 6 umfasst einen Vorsprung 200, welcher seitlich an der ersten Feder 4 anliegt und diese in eine gekrümmte Stellung drängt. Dabei spannt der Vorsprung 200 die erste Feder 4 quer zu ihrer Längserstreckung. Der Vorsprung 200 ist an einem Ansatzteil 203 angeformt, welches seitlich an dem hochstehenden ersten Schenkel 16 des Gehäuses 1 befestigt ist. Das Ansatzteil 203 ist ein Kunststoffteil, bevorzugt ein Elastomer, bevorzugt vom Typ Hytrel, und ist so geformt, dass es sich bis zu der Grundplatte 15 des Gehäuses 1 erstreckt. Das Ansatzteil 203 weist ferner einen Haltansatz 202 auf, welcher nach außen in dieselbe Richtung wie der Hebelarm 22 des Blockierhebels 2 von dem Gehäuse 1 der Blockiereinrichtung 100 vorsteht. Der Halteansatz 202 ist so positioniert, dass er die Grundplatte 15 des Gehäuses 1 zur Außenseite hin verlängert und bildet damit ein dem Hebelarm 22 gegenüberliegendes Widerlager. Die erste Feder 4 ist durch eine zylindrische Schraubenfeder verwirklicht, welche mit ihrem ersten in der Darstellung oberen Ende mit dem Hebelarm 22 des Blockierhebels 2 und mit ihrem zweiten unteren Ende an dem Halteansatz 202 festgelegt ist. Die erste Feder 4 ist so ausgelegt, dass sie in der befestigten Stellung eine Zugkraft auf den Hebelarm 22 ausübt und dadurch den Blockierhebel 2 in die in den Figuren 4 bis 6 gezeigte Stellung vorspannt. Gleichzeitigt liegt sie seitlich an einer gekrümmten Anlagefläche 201 des Vorsprunges 200 an und wird dadurch seitlich gekrümmt und zusätzlich quer zu der von ihr auf den Hebelarm 22 ausgeübten Zugkraft vorgespannt. Die von der ersten Feder 4 auf den Hebelarm 22 ausgeübte Zugkraft ist aufgrund der Schraubenform der ersten Feder 4 in Richtung ihrer Längsachse ausgebildet. Der Vorsprung 200 liegt seitlich an der ersten Feder 4 an und verformt die erste Feder 4 orthogonal zu ihrer Längsrichtung. Hierdurch wird die erste Feder 4 zusätzlich gespannt, und die in der ersten Feder 4 wirkende Zugkraft zusätzlich erhöht. Damit wird die erste Feder 4 zusätzlich verspannt und die auf den Hebelarm 22 ausgeübte Zugkraft erhöht. Durch die von dem Vorsprung 200 bewirkte Verformung der ersten Feder 4 liegt diese unabhängig von der Stellung des Blockierhebels 2 an der gekrümmten Anlagefläche 201 des Vorsprunges 200 an und kann dadurch keine oder nur sehr geringfügige geräuschverursachende Bewegungen zu der Blockiereinrichtung 100 ausführen. Ferner erstreckt sich das Ansatzteil 203 bis zu der Grundfläche 15 des Gehäuses 1 und bildet mit dem Halteansatz 202 ein im Bereich der Grundfläche 15 des Gehäuses 1 angeordnetes Widerlager aus, an dem die erste Feder 4 mit ihrem zweiten Ende befestigt ist. Damit kann eine erste Feder 4 mit einer maximal möglichen Länge verwendet werden.

Der Vorsprung 200 ist an einem Ansatzteil 203 verwirklicht, welches an dem Gehäuse 1 befestigt wird, so dass das Gehäuse 1 abgesehen von der Befestigung des Ansatzteils 203 zur Verwirklichung des Vorsprunges 200 keiner besonderen Formgebung bedarf. Ferner ist der Vorsprung 200 mit einer gekrümmten Anlagefläche 201 versehen, welche in ihrer Krümmung der Krümmung der ersten Feder 4 im Bereich der Anlage des Vorsprunges 200 gleichgerichtet ist, so dass der Vorsprung 200 mit einer vergrößerten Fläche an der gekrümmten ersten Feder 4 anliegt. Ferner kann der Vorsprung 200 durch die Verwirklichung an dem Ansatzteil 203 durch einen anderen Werkstoff als das Gehäuse 1 verwirklicht sein. Das Gehäuse 1 ist zur Verwirklichung der magnetischen Kreise I und II bevorzugt aus einem magnetischen Werkstoff bevorzugt aus einem ferromagnetischem Metall ausgebildet, während das Ansatzteil 203 hier durch einen Kunststoff bevorzugt durch ein Elastomer des Typs Hytrel gebildet ist, welcher für die Auslenkung der ersten Feder 4 die nötige Formstabilität aufweist und gleichzeitig durch seine elastischen Eigenschaften dämpfende Eigenschaften hinsichtlich der Geräuschentwicklung aufweist.

Ferner kann die erste Feder 4 zusätzlich mit einer elastischen Kunststoffummantelung versehen sein, wodurch die Geräuschentwicklung weiter reduziert werden kann.

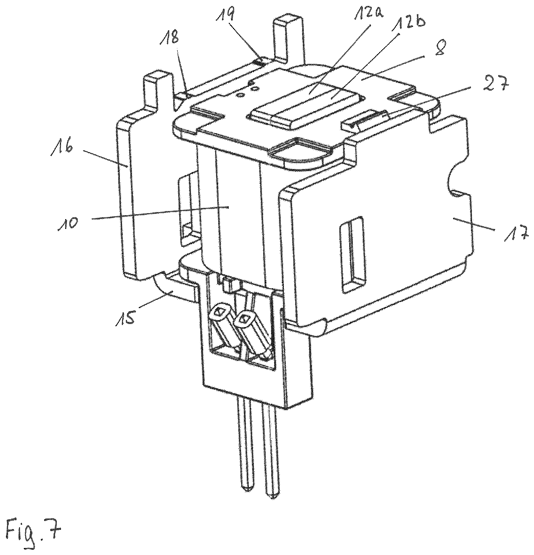

In der Figur 7 ist die weiterentwickelte Blockiereinrichtung 100 ohne den Blockierhebel 2 dargestellt. Der obere Radialflansch 8 ist zusätzlich mit einer nach oben vorstehenden Nase 27 versehen, welche mittig an einer dem zweiten hochstehenden Schenkel 17 zugewandten Randseite des Radialflansches 8 angeordnet ist und eine längliche, parallel zu der Randseite ausgerichtete Formgebung aufweist. Ferner ist der erste hochstehende Schenkel 16 mit zwei hochstehenden, voneinander beabstandeten Nasen 18 und 19 versehen. Die Nasen 18 und 19 an dem ersten hochstehenden Schenkel 16 und die Nase 27 an dem Radialflansch 8 bilden zusammen eine Dreipunktauflage für den Blockierhebel 2 in der angezogenen Stellung, so dass der Blockierhebel 2 in der angezogenen Stellung keine Kippbewegungen ausführen kann.

## Patentansprüche

1. Gurtaufroller mit
- einer drehbar gelagerten Gurtwelle (20) und
- einer daran drehbar gelagerten verzahnten Steuerscheibe (21) und
- einer elektrisch betätigbaren Blockiereinrichtung (100) mit
- einem Gehäuse (1) mit einer Grundplatte (15) und einem hochstehenden ersten Schenkel (16), und
- einem schwenkbar in einem Schwenklager des hochstehenden ersten Schenkel (16) gelagerten Blockierhebels (2) mit einer Stahlplatte (5), wobei
- die elektrisch betätigbare Blockiereinrichtung (100) die Steuerscheibe (21) durch einen Eingriff des Blockierhebels (2) in die Verzahnung (26) die Steuerscheibe (21) gegenüber der Gurtwelle (20) anhält und dadurch eine Blockierklinke zu einer Bewegung zwingt, in der sie zum Eingriff in eine fahrzeugfeste Verzahnung des Gurtaufrollers gelangt und die Gurtwelle in Auszugsrichtung blockiert, wobei
- der Blockierhebel (2) einen von dem ersten Schenkel (16) nach außen vorstehenden Hebelarm (22)aufweist, an dem eine erste Feder (4) mit einem ersten Ende angreift, welche den Blockierhebel (2) in Stellung vorspannt, in welcher er mit einer an dem Ende eines Blockierarmes (23) angeordneten Blockierspitze (25) in die Verzahnung (26) der Steuerscheibe (21) eingreift, und
- einem in dem Gehäuse (1) angeordneten Elektromagneten (3), welcher durch eine Bestromung auf den Blockierhebel (2) eine Kraft ausübt, durch welche er mit der Blockierspitze (25) aus der Verzahnung (26) der Steuerscheibe (21) gezogen wird, **dadurch gekennzeichnet, dass**
- an dem Gehäuse (1) ein Vorsprung (200) vorgesehen ist, welcher derart geformt ist, dass die erste Feder (4) unabhängig von der Stellung des Blockierhebels (2) daran anliegt und quer zu der auf den Hebelarm (22) ausgeübten Federkraft vorgespannt ist.

2. Gurtaufroller nach Anspruch 1, **dadurch gekennzeichnet, dass**
- die erste Feder (4) mit einem zweiten Ende im Bereich der Grundplatte (15) gehalten ist, und
- der Vorsprung (200) an dem von der Grundplatte (15) hochstehenden ersten Schenkel (16) des Gehäuses (1) angeordnet ist.

3. Gurtaufroller nach einem der Ansprüche 1 oder 2, **dadurch gekennzeichnet, dass**
- der Vorsprung (200) an ein an dem Gehäuse (1) gehaltenes Ansatzteil (203) angeformt ist.

4. Gurtaufroller nach Anspruch 3, **dadurch gekennzeichnet, dass**
- das Ansatzteil (203) einen im Bereich der Grundplatte (15) angeordneten Halteansatz (202) aufweist, und
- die erste Feder (4) mit ihrem zweiten Ende an dem Halteansatz (202) gehalten ist.

5. Gurtaufroller nach Anspruch 4, **dadurch gekennzeichnet, dass**
- der Halteansatz (202) die Grundplatte (15) zur Außenseite hin erweitert.

6. Gurtaufroller nach einem der Ansprüche 1 bis 5, **dadurch gekennzeichnet, dass**
- die erste Feder (4) durch eine zylindrische Schraubenfeder gebildet ist, und der Vorsprung (200) die erste Feder (4) quer zu ihrer Längserstreckung seitlich auslenkt.

7. Gurtaufroller nach einem der Ansprüche 1 bis 6, **dadurch gekennzeichnet, dass**
- der Vorsprung (200) durch einen Nocken mit einer gekrümmten Anlagefläche (201) gebildet ist.

8. Gurtaufroller nach einem der Ansprüche 1 bis 7, **dadurch gekennzeichnet, dass**
- die erste Feder (4) mindestens im Bereich der Anlage des Vorsprunges (200) eine elastische Kunststoffummantelung aufweist.

## Claims

1. Belt retractor, comprising
- a rotatably mounted belt shaft (20) and
- a toothed control disk (21) rotatably mounted thereon and
- an electrically actuatable blocking device (100) comprising
- a housing (1) comprising a base plate (15) and an upright first limb (16) and
- a blocking lever (2) which is pivotably mounted in a pivot bearing of the upright first limb (16) and comprises a steel plate (5),
- the electrically actuatable blocking device (100) stopping the control disk (21) with respect to the belt shaft (20) as a result of the blocking lever (2) engaging in the toothing (26) the control disk (21), and said blocking device as a result forcing a blocking pawl to perform a movement in which it comes into engagement in a toothing of the belt retractor, which toothing is fastened to the vehicle, and blocks the belt shaft in the pull-out direction,
- the blocking lever (2) having a lever arm (22) which projects outwardly from the first limb (16) and on which a first spring (4) engages by means of a first end, which spring preloads the blocking lever (2) into a position in which said blocking lever engages in the toothing (26) of the control disk (21) by means of a blocking tip (25) arranged at the end of a blocking arm (23), and said blocking device also comprising
- an electromagnet (3) arranged in the housing (1), which electromagnet exerts a force on the blocking lever (2) as a result of being energized, as a result of which force said blocking lever is pulled out of the toothing (26) of the control disk (21) by means of the blocking tip (25),
**characterized in that**
- a protrusion (200) is provided on the housing (1), which protrusion is shaped in such a way that the first spring (4) bears against it regardless of the position of the blocking lever (2) and is pretensioned transversely to the spring force exerted on the lever arm (22).

2. Belt retractor according to claim 1, **characterized in that**
- the first spring (4) is held in the region of the base plate (15) by means of a second end, and
- the protrusion (200) is arranged on the first limb (16) of the housing (1), which limb projects upright from the base plate (15).

3. Belt retractor according to either of claims 1 and 2, **characterized in that**
- the protrusion (200) is molded onto an attachment part (203) held on the housing (1).

4. Belt retractor according to claim 3, **characterized in that**
- the attachment part (203) has a holding attachment (202) arranged in the region of the base plate (15), and
- the first spring (4) is held on the holding attachment (202) by means of the second end of said spring.

5. Belt retractor according to claim 4, **characterized in that**
- the holding attachment (202) extends the base plate (15) toward the outside.

6. Belt retractor according to any of claims 1 to 5, **characterized in that**
- the first spring (4) is formed by a cylindrical helical spring, and the protrusion (200) laterally deflects the first spring (4) transversely to the longitudinal extension thereof.

7. Belt retractor according to any of claims 1 to 6, **characterized in that**
- the protrusion (200) is formed by a cam with a curved bearing surface (201).

8. Belt retractor according to any of claims 1 to 7, **characterized in that**
- the first spring (4) has an elastic sheath, made of a plastics material, at least in the region where it bears against the protrusion (200).

## Revendications

1. Enrouleur de ceinture comportant
- un arbre de ceinture (20) monté de manière à pouvoir tourner, et
- un disque de commande (21) denté monté de manière à pouvoir tourner sur celui-ci, et
- un dispositif de blocage (100) pouvant être actionné électriquement comportant
- un boîtier (1) comportant une plaque de base (15) et une première branche (16) surélevée, et
- un levier de blocage (2) monté de manière pivotante dans un palier de pivotement de la première branche (16) surélevée et comportant une plaque en acier (5), dans lequel
- le dispositif de blocage (100) pouvant être actionné électriquement maintient le disque de commande (21) à l'encontre de l'arbre de ceinture (20) par une mise en prise du levier de blocage (2) dans la denture (26) du disque de commande (21) et contraint ainsi un loquet de blocage à un mouvement dans lequel il vient en prise dans une denture solidaire du véhicule de l'enrouleur de ceinture et bloque l'arbre de ceinture dans le sens d'extraction, dans lequel
- le levier de blocage (2) présente un bras de levier (22) faisant saillie vers l'extérieur à partir de la première branche (16), bras de levier sur lequel un premier ressort (4) agit avec une première extrémité, lequel premier ressort précontraint le levier de blocage (2) dans la position dans laquelle il vient en prise dans la denture (26) du disque de commande (21) avec une pointe de blocage (25) disposée à l'extrémité d'un bras de blocage (23), et
- un électroaimant (3) disposé dans le boîtier (1), lequel électroaimant exerce une force sur le levier de blocage (2) grâce à une alimentation électrique, force par laquelle il est tiré avec la pointe de blocage (25) hors de la denture (26) du disque de commande (21),
**caractérisé en ce que**
- une saillie (200) est prévue sur le boîtier (1), laquelle est formée de telle sorte que le premier ressort (4) s'y applique indépendamment de la position du levier de blocage (2) et est précontraint transversalement à la force de ressort exercée sur le bras de levier (22).

2. Enrouleur de ceinture selon la revendication 1, **caractérisé en ce que**
- le premier ressort (4) est maintenu par une seconde extrémité dans la zone de la plaque de base (15), et
- la saillie (200) est disposée sur la première branche (16) du boîtier (1) et surélevée depuis la plaque de base (15).

3. Enrouleur de ceinture selon l'une des revendications 1 ou 2,
**caractérisé en ce que**
- la saillie (200) est formée sur une partie protubérante (203) maintenue sur le boîtier (1).

4. Enrouleur de ceinture selon la revendication 3, **caractérisé en ce que**
- la partie protubérante (203) présente une protubérance de maintien (202) disposée dans la zone de la plaque de base (15), et
- le premier ressort (4) est maintenu sur la protubérance de maintien (202) par sa seconde extrémité.

5. Enrouleur de ceinture selon la revendication 4, **caractérisé en ce que**
- la protubérance de maintien (202) élargit la plaque de base (15) vers l'extérieur.

6. Enrouleur de ceinture selon l'une des revendications 1 à 5,
**caractérisé en ce que**
- le premier ressort (4) est réalisé par un ressort hélicoïdal cylindrique, et la saillie (200) dévie latéralement le premier ressort (4) transversalement à son extension longitudinale.

7. Enrouleur de ceinture selon l'une des revendications 1 à 6,
**caractérisé en ce que**
- la saillie (200) est réalisée par une came comportant une surface d'appui (201) incurvée.

8. Enrouleur de ceinture selon l'une des revendications 1 à 7,
**caractérisé en ce que**
- le premier ressort (4) présente, au moins dans la zone d'appui de la saillie (200), un enrobage élastique en matière plastique.
